# NEUE EUROPÄISCHE PATENTSCHRIFT

(11) **EP 1 070 156 B2**
(45) Veröffentlichungstag und Bekanntmachung des Hinweises auf die Entscheidung über den Einspruch: **03.04.2013**
(45) Hinweis auf die Patenterteilung: 19.08.2009
(21) Anmeldenummer: 99916758.8
(22) Anmeldetag: 26.02.1999
(51) Int. Cl.: C25D 5/48, C09D 183/06, C09D 5/08, C23C 22/83

(54) **MITTEL ZUR VERSIEGELUNG VON METALLISCHEN, INSBESONDERE AUS ZINK ODER ZINKLEGIERUNGEN BESTEHENDEN UNTERGRÜNDEN**
AGENT FOR SEALING METALLIC GROUND COATS, ESPECIALLY GROUND COATS CONSISTING OF ZINC OR ZINC ALLOYS
AGENT POUR LE COLMATAGE DE COUCHES DE BASE METALLIQUES, EN PARTICULIER EN ZINC OU ALLIAGES DE ZINC

(30) Priorität: 01.04.1998 DE 19814605
(43) Veröffentlichungstag der Anmeldung: 24.01.2001
(73) Patentinhaber: Atotech Deutschland GmbH, 10553 Berlin (DE)
(72) Erfinder: KUNZ, Volker, D-65468 Trebur-Geinsheim (DE); DONSBACH, Hermann, D-65468 Trebur-Geinsheim (DE); FLAMME, Burkhard, D-58099 Hagen (DE)
(74) Vertreter: Weber, Roland
(86) Internationale Anmeldenummer: PCT/DE1999/000518
(87) Internationale Veröffentlichungsnummer: WO 1999/051793

(56) Entgegenhaltungen:
- EP-A- 0 558 837
- EP-A1- 0 816 454
- WO-A-95/21277
- DE-A- 2 732 753
- FR-A- 2 335 575
- FR-A- 2 517 703
- GB-A- 2 211 762
- JP-A- 60 166 356
- US-A- 3 986 997
- US-A- 4 407 899
- US-A- 4 466 832
- US-A- 4 828 616
- US-A- 5 389 405
- US-A- 5 433 976
- PATENT ABSTRACTS OF JAPAN vol. 010, no. 226 (C-364), 7. August 1986 (1986-08-07) & JP 61 060766 A (KANSAI PAINT CO LTD), 28. März 1986 (1986-03-28)
- PATENT ABSTRACTS OF JAPAN vol. 017, no. 100 (C-1030), 26. Februar 1993 (1993-02-26) & JP 04 290583 A (NISSHIN STEEL CO LTD), 15. Oktober 1992 (1992-10-15)
- DATABASE WPI Section Ch, Week 7722 Derwent Publications Ltd., London, GB; Class E11, AN 77-39114Y XP002111042 -& JP 52 050940 A (NIPPON STEEL CORP), 23. April 1977 (1977-04-23)
- WOLFMEIER U. ET ALL: ' Ullmann's encyclopedia of industrial chemistry', Bd. A28, 1996, VCH VERLAGSGESELLSCHAFT MBH, WEINHEIM Seiten 103 - 105

## Beschreibung

Es ist bekannt, Eisenteile, wie Schrauben, Muttern, Feder, Klammern usw., sowie größere Teile, wie Gestellteile, Balkongitter, Zaunpfosten oder dergleichen, für den Korrosionsschutz beispielsweise galvanisch oder mechanisch zu verzinken. Um den Korrosionsschutz weiter zu verbessern, ist es üblich, solchermaßen verzinkte Gegenstände oder aus Zink oder Zinklegierungen bestehende Teile zu chromatieren oder passivieren. Da Chrom-VI-Verbindungen krebserregend und giftig sind und aus Gründen des Umweltschutzes nicht mehr benutzt werden dürfen, ging man in jüngerer Vergangenheit häufig zur Passivierung mit dreiwertigem Chrom über. Auch die Verwendung von Chrom-III-Verbindungen soll aber in der Zukunft reduziert werden.

Zur Nachbehandlung von chromatierten oder passivierten Verzinkungsschichten oder Zinklegierungsschichten von Stahlteilen sind aus der DE-A-4 138 218 Nachtauchmittel bekannt, die in einem organischen Lösungsmittel Titansäureester und/oder Titanchelate sowie organofunktionelle Polysiloxane enthalten. Als organische Lösungsmittel werden insbesondere Alkohole oder Kohlenwasserstoffe verwendet.

Es zeigte sich, daß derartige wäßrige Nachbehandlungsmittel nicht über längere Zeit beständig sind und sich durch UV-Einwirkung dunkelrot färben. Außerdem sind sie nicht überlackierbar, was für viele Anwendungsgebiete einen erheblichen Nachteil darstellt. Für größere Teile ergeben diese bekannten Nachbehandlungsmittel nur einen unzureichenden Korrosionsschutz, und besonders nachteilig ist auch, daß in ihnen organische Lösungsmittel verwendet werden müssen.

Die JP 52 50940 beschreibt Versiegelungsmittel für Stahl mit 0,1 bis 30 % Wasserglas oder Natriumsilikaten und einem organofunktionalen Silan-Kopplungsmittel in einer Menge von 0,1 bis 10%. Das Gewichtsverhältnis von Silikat zu Silan gemäß D2 reicht von 1:100 bis 300:1. Bei dem Versiegelungsmittel der JP 52 50940 kann es zu Problemen insbesondere bei der Beschichtung von Kleinteilen aufgrund von Filmabrissen kommen.

Die WO 95/21277 beschreibt ein Versiegelungsmittel, das als wesentliche Bestandteile eine Polyhydroxyarylcarbonsäure und ein Silanderivat als Kopplungsmittel und als weitere Bestandteile einen mit Wasser mischbaren einwertigen Alkohol, zwei- oder mehrwertige Metallkationen und Beschleunigeranionen enthält. Der Gehalt an Polyhydroxyarylcarbonsäure und Silanderivat in der Zusammensetzung soll in der Summe mindestens 1 bis 50% betragen. Das Mittel enthält kein Silikat.

Die US 5 433 976 beschreibt eine Behandlungslösung für Metalle, die ein anorganisches Silikat und/oder ein anorganisches Aluminat, ein organofunktionales Silan und einen Vernetzer mit zwei oder mehr Trialkoxysilylgruppen enthält.

Die US 4 828 616 beschreibt eine Zusammensetzung mit einem Alkalimetallsilikat, wenigstens 0,5% Aminoalkohol, einem wasserlöslichen Harz, das z. B. Nylon, ein natürliches Polysaccharid oder ein natürliches Protein sein kann, und einem wasserlöslichen Silankopplungsmittel. Die Konzentration an SiO₂ in der Zusammensetzung beträgt 0,1 bis 1,0 Gew.-%. Das Behandlungsmittel ist ausschließlich für Aluminiumoberflächen vorgesehen. Bei den beschriebenen Silanderivaten handelt es sich ausnahmslos um Aminderivate.

Die der Erfindung zugrundeliegende Aufgabe bestand nun darin, Chrom-VI-freie Versiegelungsmittel für den Korrosionsschutz von metallischen, insbesondere aus Zink- bzw. Zinklegierungen bestehenden Untergründen zu bekommen, die frei von organischen Lösungsmitteln und vorzugsweise für eine Überlackierung geeignet sind und die insbesondere bei der Beschichtung von Kleinteilen verbesserte Verarbeitungseigenschaften aufweisen.

Gelöst wird diese Aufgabe durch ein Versiegelungsmittel gemäß Anspruch 1.

Diese Versiegelungsmittel sind frei von organischen Lösungsmitteln, wie Alkoholen oder Kohlenwasserstoffen, sein und ergeben einen hervorragenden Korrosionsschutz von metallischen, wie aus Aluminium, Zink oder Zinklegierungen bestehenden Untergründe ohne Verwendung von Chrom-VI. Außerdem sind diese Versiegelungsmittel überlackierbar und ergeben eine gute Haftung zu üblichen Korrosionsschutzlacken, wobei dünne Lackschichten ausreichen, was bei Kleinteilen, wie Schrauben, Muttern und dergleichen, beispielsweise für die Maßhaltigkeit von Gewinden von Vorteil ist.

Die erfindungsgemäßen wäßrigen Versiegelungsmittel sind über Monate beständig und können bei Temperaturen von 10 bis 90, vorzugsweise von 20 bis 30 oder 40 bis 50 °C verarbeitet werden.

Bevorzugt sind in der obigen Formel I x und y ganze Zahlen von 1 bis 4, wobei x besonders bevorzugt 1 und y besonders bevorzugt 2 bis 4, insbesondere 3 sind. R bedeutet bevorzugt ein Wasserstoffatom oder eine Methylgruppe. A ist bevorzugt die Gruppe CH₂OH-CHOH-.

Kolloidale Kieselsäuren in der Form von Solen oder Gelen, insbesondere von Solen, sind im Handel erhältlich, wie beispielsweise unter dem Handelsnamen "Ludox" oder "Levasil". Kolloidale Kieselsäuren sind Salze von Kieselsäure, wie beispielsweise und bevorzugt Lithiumsalze, die auch unter der Bezeichnung "Lithiumpolysilikat" bekannt sind. In diesen kolloidalen Kieselsäure-Lithiumsalzen ist das Molverhältnis von SiO₂/Li₂O zweckmäßig im Bereich von 4,5 bis 5,5, vorzugsweise im Bereich von 4,8 bis 5,2.

Der kolloidale Stoff (b) kann zur Einstellung des pH-Wertes herangezogen werden, wobei durch entsprechende Mischungen beliebige pH-Werte erzielt werden können. Die Verwendung von Lithiumpolysilikat oder anderen anionischen Polysilikaten, Solen oder Gelen ergibt beispielsweise einen alkalischen pH-Wert im Bereich von pH 9 bis 11, während die Verwendung von kolloidalem kationischem SiO₂ einen sauren pH-Wert ergibt. Durch gezielte Mischungen von Lithiumpolysilikat oder anderen anionischen Polysilikaten, Solen oder Gelen und kolloidalem kationischem Kieselsol können beliebige dazwischenliegende pH-Werte eingestellt werden.

Das Gewichtsverhältnis von b : a liegt im Bereich von 1 : 3 bis 3 : 1, besonders bei etwa 2 : 1. Der Wassergehalt der erfindungsgemäßen Versiegelungsmittel liegt bei 20 bis 90 Gew.%, besonders bei 70 bis 80 Gew.%.

Besonders günstig ist es, die Reibungszahl der behandelten Teile, wie beispielsweise von Schrauben oder Muttern, durch Zusatz von Wachsdispersionen oder Wachspigmenten zu den erfindungsgemäßen Mitteln zu verbessern. Dies gilt insbesondere für alkalische neutrale oder saure Versiegelungsmittel nach der Erfindung. Hierzu kann das erfindungsgemäße Versiegelungsmittel mit dem betreffenden Wachs vermahlen werden, oder es können anionische, kationische und/oder nichtionische Wachsdipersionen zugemischt werden, wobei beliebige Wachse eingesetzt werden können und fluorhaltige oder fluorfreie Formulierungen möglich sind

Es ist auch in bestimmten Verwendungen zweckmäßig, zur Steuerung der Untergrundbenetzung Netzmittel, wie Polypropylen- oder Polyethylen, Polyethylenoxide oder modifizierte Siloxane als Netzmittel zuzusetzen. Bei Bedarf können organische Bindemitteldispersionen zugegeben werden.

Die erfindungsgemäßen Versiegelungsmittel beruhen vollständig auf wäßriger Basis, ohne daß organische Lösungsmittel zugesetzt werden. Wichtig ist, daß die erfindungsgemäßen Mittel kein Chrom-VI enthalten.

Die erfindungsgemäßen Versiegelungsmittel sind bei Fehlbeschichtungen mit Hilfe heißer alkalischer Lösungen oder Säuren entfernbar. Das Auftragen der Versiegelungsmittel kann mit herkömmlichen Methoden erfolgen, wie durch Tauchverfahren, Spritzverfahren mit Spritzpistole und Zentrifugenapplikation. Die Versiegelungsmittel können direkt auf Zink- oder Zinklegierungsuntergründen aufgebracht werden, erforderlichenfalls jedoch auch auf chromatierten, phosphatierten, passivierten oder gefärbten Zink- bzw. Zinklegierungsschichten. Die erfindungsgemäßen getrockneten Versiegelungsmittel können, wie erwähnt, überlackiert werden, wobei übliche organische Harze und Silikonharze eingesetzt werden können. Vorzugsweise verwendet man wäßrige Systeme. Die Bindungsfestigkeit der erfindungsgemäßen Mittel zu solchen Überlackierungen ist hervorragend. Blasenbildung organischer Decklacke, die im Mikroschichtbereich, z. B. von 8 bis 20 µm, arbeiten, wird praktisch vermieden. Günstig sind zum Überlackieren insbesondere wassermischbare Lacke und Beschichtungssysteme. Die erfindungsgemäßen Versiegelungsmittel können in Verbindung mit Elektrophoreselacken eingesetzt werden, die anaphoretisch oder kathaphoretisch abgeschieden werden. Bekannt ist, daß Kataphorese Tauchlacke im Korrosionsschutz bessere Ergebenisse als Anaphorese Tauchlacke erzielen. Die erfindungsgemäßen Versiegelungsmittel erhöhen den Korrosionsschutz der anaphoretischen Tauchlacke und ergeben auf gegebenenfalls phosphatierten, chromatierten, passivierten oder gefärbten Zink- und Zinklegierungsuntergründen mit kataphoretisch abgeschiedenen Tauchlacken vergleichbare Ergebnisse. Dabei liegt kein Unterschied der Ergebnisse bei der Applikation am Gestell oder bei der Trommelbeschichtung vor.

Ein weitere Vorteil besteht darin, daß Zink- oder Zinklegierungsschichten, wie Zink-Kobalt, Zink-Eisen, Zink-Zinn oder Zink-Nickel III-wertig passiviert oder schwarzgefärbt und versiegelt werden können bzw. die Versiegelung ohne Passivierung direkt auf den später zu lackierenden Untergrund aufgetragen werden kann. Die versiegelten Untergründe zeigen in Kombination mit nachfolgenden Lackschichten sehr gute Korrosionsschutzstandzeiten im Bereich von 500 - 1500 h im Salzsprühtest nach DIN 50021-SS und sind Chrom-IV-frei. Die Lackschichten können durch Elektrophorese, Tauchschleuderverfahren, konventionelles Spritzen, konventionelles Tauchen usw. aufgetragen werden.

Der oben angeführte Aufbau von Metall-, insbesondere Zink- bzw. Zinklegierungsuntergrund plus Versiegelung plus Lack bietet hervorragende isolierende Eigenschaften und dient zur Vermeidung von Kontaktkorrosion bei Bauteilen aus Stahl, die im Verbund mit Magnesium oder Aluminium zum Einsatz kommen. Die Versiegelung erzeugt durch die Applikationsmethode eine sogenannte Dampfsperre mit den Metall-, insbesondere Zink- bzw. Zinklegierungsschichten. Kommt es zur Verletzung der Lackschicht (Topcoat), ist durch die Versiegelung nocht der benötigte Kontaktkorrosionsschutz vorhanden.

### Beispiel 1

| | |
|---|---|
| Handelsübliches hydrolysiertes 3-Glycidyloxypropyltrialkoxysilan | 20 Gew.% |
| Lithiumpolysilikat | 40 Gew.% |
| Wasser | 40 Gew.% |

### Beispiel 2

| | |
|---|---|
| Hydrolysiertes 3-Glycidyloxypropyltrialkosilan wie in Beispiel 1 | 20 Gew.% |
| Kieselsol kationisch, sauer bis neutral | 40 Gew.% |
| Wasser | 40 Gew.% |

### Beispiel 3

| Hydrolysiertes 3-Glycidyloxypropyltrialkoxysilan wie in Beispiel 1 | |
|---|---|
| Lithiumpolysilikat | 20 Gew.% |
| Kieselsol kationisch sauer bis neutral | 20 Gew.% |
| Wasser | 40 Gew.% |

Der pH-Wert der Zusammensetzungen 1 und 3 liegt im Bereich von 9 bis 11, derjenige der Zusammensetzung 2 im Bereich von 3 bis 5. Durch beliebige Abmischungen können dazwischenliegende pH-Werte, wie neutraler pH-Wert, eingestellt werden.

## Patentansprüche

1. Versiegelungsmittel für metallische, insbesondere aus Zink oder Zinklegierungen bestehende Untergründe, bestehend aus einer von organischen Lösungsmitteln freien, wassrigen Dispersion von
a) wenigstens einem Silanderivat der allgemeinen Formel I 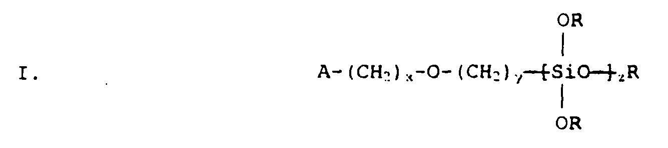 worin A einer der Reste 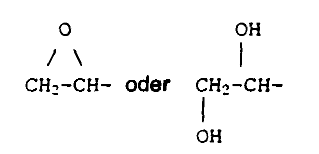 bedeutet, x eine ganze Zahl von 1 bis 6 und y 0 oder eine ganze Zahl von 1 bis 6 bedeutet, die Gruppen R untereinander gleich oder verschieden sind und H oder C₁₋₈ Alkyl bedeuten und z 1 bis 4 bedeutet,
b) kolloidalem anionischem, alkalischem Kieselsäuresol oder Polysilikatsol und gegebenenfalls kolloidalem kationischem, saurem oder neutralem Kieselsäuresol und
c) optional zusätzlich dispergiertem Wachs und optional zusätzlich einem dispergierten organischen Bindemittel.
wobei das Versiegelungsmittel einen Wassergehalt von 20 bis 90 Gew.-% hat und das Gewichtsverhältnis von anionischem, alkalischem Kieselsäuresol oder Polysilikatsol und gegebenenfalls kationischem, saurem oder neutralem Kieselsäuresol zu dem Silanderivat 1:3 bis 3:1 beträgt und

2. Versiegelungsmittel nach Anspruch 1, **dadurch gekennzeichnet, dass** A die Gruppe CH₂OH-CHOH- bedeutet.

3. Versiegelungsmittel nach Anspruch 1 oder 2, **dadurch gekennzeichnet, dass** x 1 bis 4, vorzugsweise 1 und y 1 bis 4, vorzugsweise 3 bedeuten.

4. Versiegelungsmittel nach einem der Ansprüche 1 bis 3, **dadurch gekennzeichnet, dass** R H oder Methyl bedeutet.

5. Versiegelungsmittel nach einem der Ansprüche 1 bis 4, **dadurch gekennzeichnet, dass** das Silanderivat ein Hydrolyseprodukt von 3-Glycidyloxypropyltrialkoxysilan und/oder Glycidyloxytrimethoxysilan ist.

6. Versiegelungsmittel nach einem der Ansprüche 1 bis 5, **dadurch gekennzeichnet, dass** es als Komponente (b) Lithiumpolysilikatsol und gegebenenfalls ein kationisches, saures oder neutrales Kieselsäuresol enthält.

7. Verwendung eines Versiegelungsmittels nach einem der Ansprüche 1 bis 6 zur direkten Beschichtung metallischer Untergründe ohne deren Chromatierung.

8. Verwendung nach Anspruch 7 in Verbindung mit der Aufbringung eines Decklackes.

## Claims

1. An agent for sealing metallic substrates, in particular substrates consisting of zinc or zinc alloys, consisting of an aqueous dispersion free of organic solvents of
a) at least one silane derivative having the general formula I 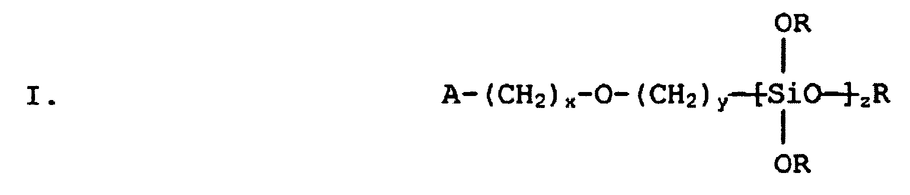 wherein A is the residue 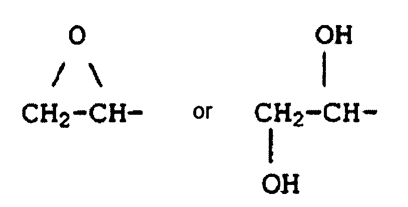 x is a whole number from 1 to 6 and y is 0 or a whole number from 1 to 6, groups R which may be identical or different, represent hydrogen or C₁₋₆ alkyl and z is 1 to 4,
b) a colloidal anionic alkaline silicic acid sol or polysilicate sol and possibly colloidal cationic acidic or neutral silicic acid sol and
c) optionally additionally a dispersed wax and optionally additionally a dispersed organic binding agent,
wherein the sealing agent has a water content of 20 to 90 % by weight and the weight ratio of colloidal anionic alkaline silicic acid sol or polysilicate sol and possibly colloidal cationic acidic or neutral silicic acid sol to said silane derivative is 1:3 to 3:1.

2. A sealing agent according to claim 1, **characterized in that** A is the group CH₂OH-CHOH-.

3. A sealing agent according to claim 1 or claim 2, **characterized in that** x is 1 to 4, preferably 1, and y is 1 to 4, preferably 3.

4. A sealing agent according to any of claims 1 to 3, **characterized in that** R is H or methyl.

5. A sealing agent according to any one of claims 1 to 4, **characterized in that** the silane derivative is a hydrolysis product of 3-glycidyloxypropyltrialkoxysilane and/or glycidyloxytrimethoxysilane.

6. A sealing agent according to any one of claims 1 to 5, **characterized in that** as component (b) it contains lithium polysilicate sol and possibly a cationic acidic or neutral silicic acid sol.

7. Use of a sealing agent according to any one of claims 1 to 6 for directly coating metallic substrates which have not been chromated.

8. Use according to claim 7, in combination with application of a top-coat.

## Revendications

1. Agent de colmatage de couches de base métalliques, en particulier en zinc ou alliages de zinc, qui est constitué d'une dispersion aqueuse, exempte de solvants organiques,
a) d'au moins un dérivé de silane présentant la formule générale I 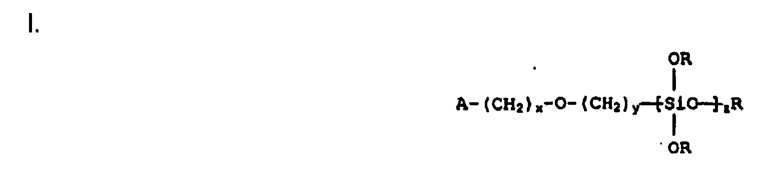 où A désigne un des résidus 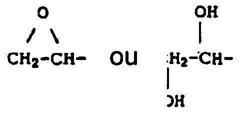 x désigne un nombre entier de 1 à 6 et y 0 ou un nombre entier de 1 à 6, les groupes R sont identiques ou différents les uns des autres et H ou C₁₋₆ désignent un alkyle et z désigne 1 à 4, et
b) de sol anionique et alcalin d'acide silique ou de polysilicate, et, le cas échéant, de sol cationique, acide ou neutre d'acide silique, et
c) de plus, en option, de cire dispersée et de plus, en option, d'un liant organique dispersé,
l'agent de colmatage présentant une teneur en eau de 20 à 90% en poids et le rapport pondéral du sol anionique et alcalin d'acide silique ou de polysilicate, et, le cas échéant, du sol cationique, acide ou neutre d'acide silique au dérivé de silane étant de 1 :3 à 3 :1.

2. Agent de colmatage selon la revendication 1, **caractérisé en ce que** A désigne le groupe CH₂OH-CHOH-.

3. Agent de colmatage selon la revendication 1 ou 2, **caractérisé en ce que** x désigne 1 à 4, de préférence 1, et y désigne 1 à 4, de préférence 3.

4. Agent de colmatage selon l'une quelconque des revendications 1 à 3, **caractérisé en ce que** R désigne H ou du méthyle.

5. Agent de colmatage selon l'une quelconque des revendications 1 à 4, **caractérisé en ce que** le dérivé de silane est un produit d'hydrolyse de 3-glycidyloxypropyltrialcoxysilane et/ou glycidyloxytriméthoxysilane.

6. Agent de colmatage selon l'une quelconque des revendications 1 à 5, **caractérisé en ce qu'**il contient comme composant (b) un polysilicate de lithium et, le cas échéant, un sol cationique, acide ou neutre d'acide silique.

7. Utilisation d'un agent de colmatage selon l'une quelconque des revendications 1 à 6 pour le revêtement direct de couches de base métalliques sans qu'elles subissent une chromatation.

8. Utilisation selon la revendication 7 en liaison avec l'application d'une peinture de finition.
